# EUROPEAN PATENT APPLICATION

(11) **EP 3 181 892 A1**
(43) Date of publication of application: **21.06.2017**
(21) Application number: 16201861.8
(22) Date of filing: 02.12.2016
(51) Int. Cl.: F02P 23/04, G02B 1/118

(54) **OPTICAL WINDOW MEMBER, LASER DEVICE, IGNITION SYSTEM, AND INTERNAL COMBUSTION ENGINE**

(30) Priority: 16.12.2015 JP 2015245045
(71) Applicant: Ricoh Company, Ltd., Tokyo 143-8555 (JP)
(72) Inventor: OKURA, Yusuke, Ohta-ku, Tokyo 143-8555 (JP); HAGITA, Kentaroh, Ohta-ku, Tokyo 143-8555 (JP); SUZUDO, Tsuyoshi, Ohta-ku, Tokyo 143-8555 (JP); JIKUTANI, Naoto, Ohta-ku, Tokyo 143-8555 (JP)
(74) Representative: White, Duncan Rohan

(57) **Abstract**

An optical window member (208) includes an incident surface (a) onto which a laser light is directed and an exit surface (b) from which the laser light exits. At least one of the incident surface (a) and the exit surface (b) has a plurality of protrusions or recesses formed therein. An interval between centers of adjacent protrusions or adjacent recesses is shorter than or equal to a wavelength of the laser light.

## Description

### BACKGROUND

### Technical Field

Embodiments of the present disclosure relate to an optical window member, a laser device, an ignition system, and an internal combustion engine.

### Related Art

Laser devices that emit laser light are expected to find applications in various kinds of fields, including, for example, ignition systems, laser beam machines, and medical equipment.

For example, a laser device used for an ignition system of an internal combustion engine disclosed in JP-4021954-B1 (JP09 (1997)-303244-A) includes an optical window member on the optical path of a laser beam emitted from a light source.

However, typical optical windows, such as the above-described optical window member, disclosed in JP-4021954-B1 (JP09 (1997)-303244-A) may change the intensity of the laser beam.

### SUMMARY

In an aspect of this disclosure, there is provided an improved optical window member including an incident surface onto which a laser light is directed and an exit surface from which the laser light exits. At least one of the incident surface and the exit surface has a plurality of protrusions or recesses. An interval between centers of adjacent protrusions or recesses of the plurality of protrusions or recesses is shorter than or equal to a wavelength of the laser light.

In another aspect of this disclosure, there is provided an improved laser device that includes a light source unit including a laser light source, an optical system to concentrate a laser light emitted from the light source unit, and the optical window member as described above into which the laser light having passed through the optical system enters.

In still another aspect of this disclosure, there is provided an improved ignition system including the laser device as described above, and a driver to drive a laser light source of the laser device.

In yet another aspect of this disclosure, there is provided an improved internal combustion including the ignition system according to claim 14 to ignite fuel to generate flammable gas.

According to the embodiments of the present disclosure, changes in intensity of laser beams are successfully prevented or reduced.

### BRIEF DESCRIPTION OF THE DRAWINGS

The aforementioned and other aspects, features, and advantages of embodiments of the present disclosure will be better understood by reference to the following detailed description when considered in connection with the accompanying drawings, wherein:
FIG. 1 is a schematic diagram of an engine according to an embodiment of the present disclosure;
FIG. 2 is an illustration of an ignition system according to an example embodiment of the present disclosure;
FIG. 3 is an illustration of a laser resonator according to an embodiment of the present disclosure;
FIG. 4A is an illustration of an optical window member according to an embodiment of the present disclosure;
FIG. 4B is a graph of the change in refractive index n at the interface between micro-protrusions of the optical window member and the atmosphere;
FIG. 5A is an illustration of advantageous effects of an optical window according to a comparative example;
FIG. 5B is an illustration of advantageous effects of an optical window member according to an embodiment of the present disclosure;
FIG. 6 is an illustration of micro-protrusions according to Example 1 of the present disclosure;
FIG. 7 is an illustration of micro-protrusions according to Example 2 of the present disclosure;
FIG. 8 is an illustration of micro-protrusions according to Example 3 of the present disclosure;
FIG. 9A is an illustration of a micro-protrusion area at an output-end face;
FIG. 9B is an illustration of another micro-protrusion area at an output-end face;
FIG. 10A is an illustration of another micro-protrusion area at an output-end face;
FIG. 10B is an illustration of another micro-protrusion area at an output-end face;
FIG. 11 is an illustration of another micro-protrusion area at an output-end face;
FIG. 12 is an illustration of an optical window member according to variation 1 of the present disclosure;
FIG. 13A is an illustration of an optical window member according to variation 2 of the present disclosure;
FIG. 13B is an illustration of an optical window member according to variation 3 of the present disclosure;
FIG. 14A is an illustration of an optical window member according to variation 4 of the present disclosure;
FIG. 14B is an illustration of an optical window member according to variation 5 of the present disclosure;
FIG. 15 is an illustration of an optical window member according to variation 6 of the present disclosure; and
FIG. 16 is a graph of a Gaussian distribution of a beam.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

In an ignition system including a laser device, laser light emitted from a laser resonator of the laser device passes through a transparent window (optical window member) and concentrates in the interior of the combustion chamber. This transparent window serves to protect optical components of the laser device from high temperature and pressure during combustion of the internal combustion engine.

Currently, the flammable fuel-air mixture in a combustion chamber of an internal combustion engine is ignited mainly by a spark plug, i.e., spark ignition of electric discharge. However, in spark ignition, electrodes of a spark plug are exposed in a combustion chamber for the structural reasons. For this reason, the longevity of spark plugs is short when spark ignition of electric discharge is adopted.

By contrast, laser ignition is known where ignition is performed by collecting and concentrating laser beam as in the ignition system disclosed in JP-4021954-B1. In such laser ignition, no electrode is employed, and electrodes are not exposed in a combustion chamber of an internal combustion engine. Accordingly, there is no need to concern about the erosion of electrodes, and the longevity of an ignition system can be increased.

However, in the ignition system disclosed in JP-4021954-B1, laser light passed through the laser resonator is reflected by the output-end face of the optical window, and the reflected light concentrates in the optical window member. This might degrades the optical window member. Accordingly, the transmission of the optical window member decreases, thereby reducing the output power of the laser device. Note that an anti-reflection coating is applied to an optical window member to reduce the reflection of light at the optical window member. However, many materials of the coating undesirably alter because the optical window member faces a combustion chamber and is exposed to a high temperature of approximately 600°C. For this reason, the anti-reflection coating is difficult to apply onto the output-end face of the optical window member.

In combustion of the internal combustion engine, particles of calcium oxide doped to maintain the quality of engine oil gradually adhere to the output-end face of the optical window member. This might cause the optical window member to become cloudy. Accordingly, the transmission of the optical window member decreases, thereby reducing the output power of the laser device.

When light reflected by the output-end face of the optical window member returns to a laser medium or a pump source, the output power of the laser device might change.

Therefore, the inventor has conceived of the above-described embodiments to cope with such circumstances.

In the following description, an embodiment of the present disclosure is described with reference to the drawings.

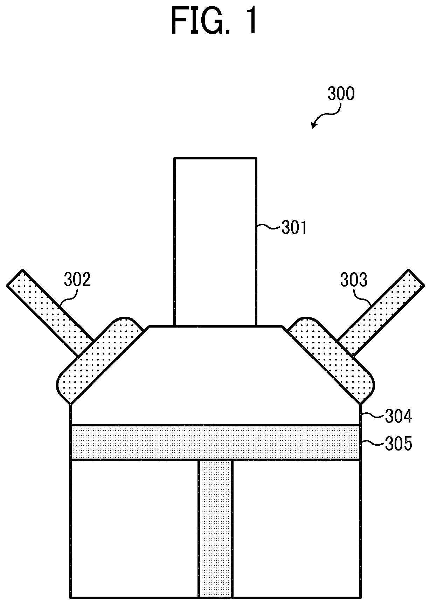

FIG. 1 is a schematic view of the principal parts of an engine 300 that serves as an internal combustion engine, according to an embodiment of the present disclosure.

The engine 300 includes, for example, an ignition system 301, a fuel injector 302, an exhaust 303, a combustion chamber 304, and a piston 305.

The operation of the engine 300 is briefly described. (1) The fuel injector 302 injects the flammable fuel-air mixture into the combustion chamber 304 (aspiration). (2) The piston 305 moves upward and compresses the flammable fuel-air mixture (compression). (3) The ignition system 301 emits laser beams into the combustion chamber 304. Accordingly, the fuel is ignited (ignition). (4) Flammable gas is generated and the piston 305 moves downward (combustion). (5) The exhaust 303 exhausts the flammable gas from the combustion chamber 304 (exhaust).

As described above, a series of processes including aspiration, compression, ignition, combustion, and exhaust are repeated. Then, the piston 305 moves upward and downward according to the changes in the volume of the gas in the combustion chamber 304, and kinetic energy is produced. As fuel, for example, natural gas and gasoline are used.

Note that the above-described operation of the engine 300 is performed based on the instruction made through an engine controller that is externally provided and is electrically connected to the engine 300.

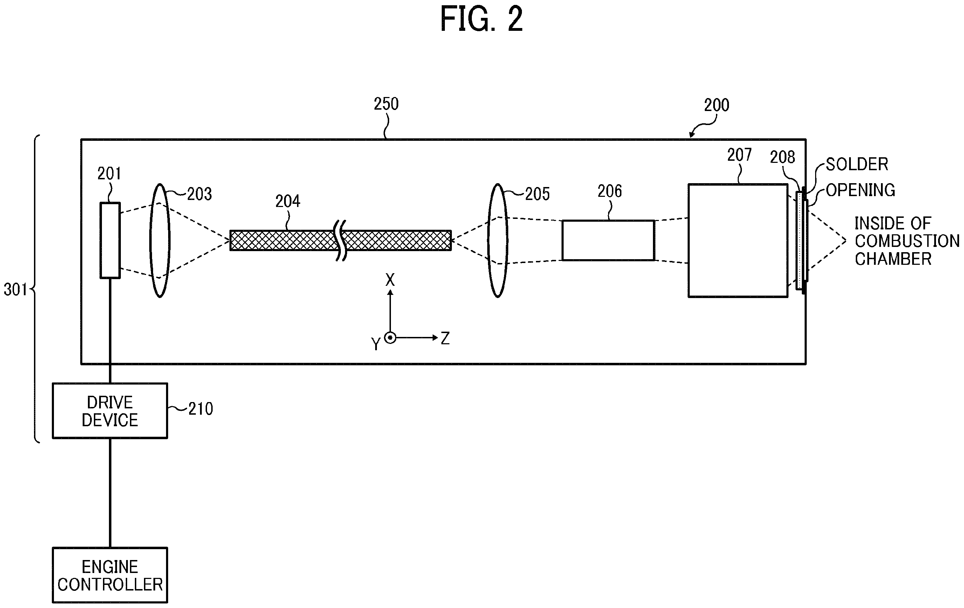

As illustrated in FIG. 2 for example, the ignition system 301 includes a laser device 200 and a driver 210.

The laser device 200 includes a surface-emitting laser array 201, a first condensing optical system 203, an optical fiber 204 as a light transmission member, a second condensing optical system 205, a laser resonator 206, a third condensing optical system 207, a housing 250, and an optical window member 208 disposed in the housing 250. The housing 250 houses the surface-emitting laser array 201, the first condensing optical system 203, the optical fiber 204, the second condensing optical system 205, the laser resonator 206, and the third condensing optical system 207. In the present embodiment, it is assumed that the direction in which the surface emitting laser 201 emits light is the +Z direction.

The surface-emitting laser 201 is a vertical cavity-surface emitting laser (VCSEL). In the present embodiment, the surface-emitting laser 201 is a pump source, and includes a plurality of light-emitting units. When the surface-emitting laser 201 emits light, the multiple light-emitting units emit light at the same time. Moreover, the wavelength of the light that is emitted from the surface-emitting laser 201 is 808 nanometer (nm). The surface-emitting laser 201 is driven by the driver 210.

Thus, a surface-emitting laser 201 is a light source that is advantageous in pumping a Q-switched laser whose characteristics vary widely due to the displacement in pumping wavelength. This is because very little wavelength displacement of emitted light occurs due to changes in temperature. Accordingly, when a surface emitting laser is used as a pump source, the temperature control of the environment becomes easier.

A Q-switched laser enhances the population inversion in advance with the light emitted from a pump source, and generates energy by releasing the Q-switching elements. Accordingly, peak energy becomes high. Due to such characteristics, Q-switched lasers are applied to an ignition system of an internal combustion engine having a combustion chamber where flammable fuel-air mixture is to be ignited.

The first condensing optical system 203 is a condenser lens, and concentrates the light emitted from the surface emitting laser 201. Note that the first condensing optical system 203 may include a plurality of optical elements.

The optical fiber 204 is disposed such that the light exited from the first condensing optical system 203 is concentrated at the center of the -Z-side lateral edge face of the core. In the present embodiment, an optical fiber where the core diameter is 1.5 mm is used as the optical fiber 204.

Due to the provision of the optical fiber 204, the surface-emitting laser 201 may be disposed at a position distant from the laser resonator 206, thereby enhancing design flexibility As the surface-emitting laser 201 is isolated from the heat source when the laser device 200 is used for an ignition system, the ranges of choices for a method for cooling the engine 300 may be extended. Further, as the surface-emitting laser 201 is isolated from the engine 300 as an oscillatory source, the reliability of the surface-emitting laser 201 increases.

The light that has entered the optical fiber 204 propagates through the core, and exits from the +Z side lateral edge face of the core.

The second condensing optical system 205 is a condenser lens disposed on the optical path of the light emitted from the optical fiber 204, and concentrates the light emitted from the optical fiber 204. Depending on the quality of the light or the like, the second condensing optical system 205 may include a plurality of optical elements. The light that has been concentrated by the second condensing optical system 205 enters the laser resonator 206.

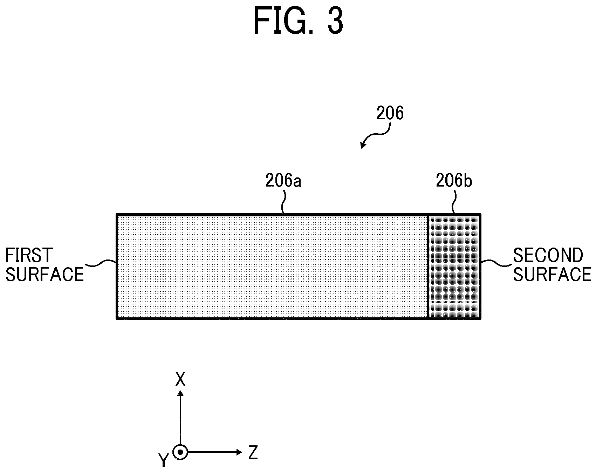

The laser resonator 206 is a Q-switched laser, and as illustrated in FIG. 3 for example, the laser resonator 206 includes a laser medium 206a and a saturable absorber 206b.

The laser medium 206a is a neodymium (Nd): yttrium aluminum garnet (YAG) ceramic crystal, where 1.1 percent Nd is doped. The saturable absorber 206b is a chromium (Cr): YAG ceramic crystal, where the initial transmittance is 30 percent.

In the present embodiment, the Nd: YAG crystal and the Cr: YAG crystal are both ceramic. The laser resonator 206 is a so-called composite crystal in which the laser medium 206a and the saturable absorber 206b are bonded together.

The light that has been concentrated by the second condensing optical system 205 enters the laser medium 206a. In other words, the laser medium 206a is optically pumped by the light that has been concentrated by the second condensing optical system 205. Note that the wavelength of the light that is emitted from the surface-emitting laser 201 (i.e., 808 nm in the present embodiment) is a wavelength where the absorption efficiency is the highest in the YAG crystal. The saturable absorber 206b performs Q-switching.

The surface on the light-entering side (-Z side) of the laser medium 206a and the surface on the light-exiting side (+Z side) of the saturable absorber 206b are optically polished, and each of the surfaces serves as a mirror. In the following description, for the sake of convenience, the surface on the light-entering side of the laser medium 206a is referred to as a first surface, and the surface on the light-exiting side of the saturable absorber 206b is referred to a second surface (see FIG. 3).

On the first and second surfaces, dielectric multi-layers are coated according to the wavelength of the light that is emitted from the surface-emitting laser array 201 (i.e., 808 nm in the present embodiment) and the wavelength of the light that exits from the laser resonator 206 (i.e., 1064 nm in the present embodiment).

More specifically, a dielectric multilayer that indicates sufficiently high transmittance to light with a wavelength of 808 nm and indicates sufficiently high reflectance to light with a wavelength of 1064 nm are coated on the first surface. On the second surface, a dielectric multilayer that indicates reflectance of about 50 percent to light with a wavelength of 1064 nm is coated.

Accordingly, the light is resonated and amplified inside the laser resonator 206. In the present embodiment, the length of the laser resonator 206 is 10 mm.

The third condensing optical system 207 is disposed in the optical path of light emitted from the laser resonator 206, and is constituted by, e.g., at least one lens. Moreover, the focal point of the light that is emitted from the ignition system 301 is easily adjusted with changes in position of one or more lenses of the third condensing optical system 207 along the optical axis or in combination of lenses of the third condensing optical system 207.

The optical window member 208 involves the optical path of the light that is emitted from the third condensing optical system 207, and is a transparent or semitransparent rectangular member.

The optical window member 208 is disposed to surround and cover an opening formed in a surface of the housing 250 facing the combustion chamber 304. A laser beam that is emitted from the third condensing optical system 207 and passed through the optical window member 208 is a laser beam that is emitted from the laser device 200.

In the present embodiment, sapphire glass that exhibits good durability at high temperature and high pressure is used as the material of the optical window member 208.

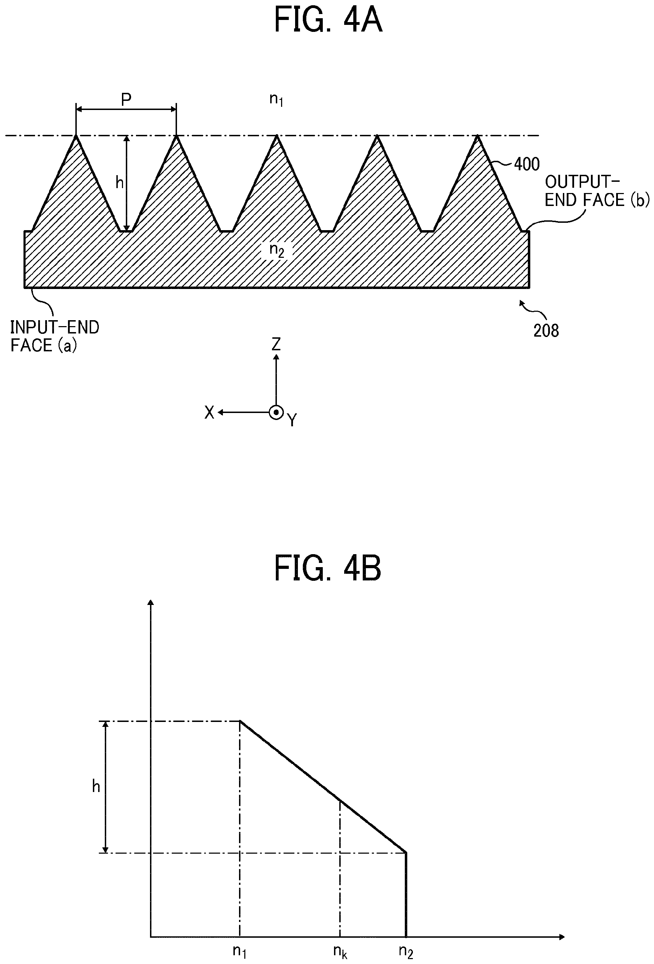

In the present embodiment, as illustrated in FIG. 4A for example, the output-end face (the exit surface b) of the optical window member 208 has a plurality of protruding microstructures (hereinafter, referred to also as "micro-protrusions") 400 with a pitch P (distance between adjacent protrusion peaks) that is shorter than the wavelength of the incident light (i.e., 1064 nm in the present embodiment). Note that only a portion of the optical window member 208 is shown for the sake of simplification in FIG. 4A.

Each micro-protrusion 400 has, e.g., a shape (a tapered shape) in which a cross-sectional area gradually decreases in a direction (+Z direction) from the incident side to the exit side of the optical window member 208.

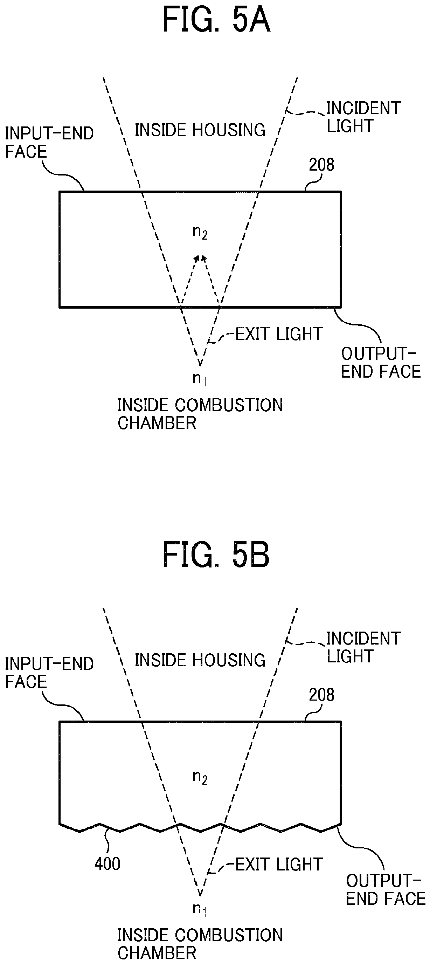

In an optical window member without the micro-protrusions according to a comparative example as illustrated in FIG. 5A, a refractive index rapidly changes from n₂ to n₁ at the interface between the output-end face and the atmosphere within a combustion chamber so that the reflectivity of incident light increases at the interface.

Accordingly, in the comparative example, light that is reflected by the interface between the output-end face and the atmosphere within the combustion chamber concentrates in the interior of the optical window member, thereby degrading the optical window member. Alternatively, particles generated within the combustion chamber adhere to the optical window member. Further alternatively, reflected light returns to a laser medium or a pump source. As a result, the intensity of laser light emitted from a laser device might change.

FIG. 4B is a graph of the change in refractive index n at the interface between the micro-protrusions 400 of the optical window member 208 and the atmosphere within the combustion chamber 304 according to the present embodiment. As can be understood from FIGs. 4B and 5B, changes in refractive index n, i.e., an amount of change from n₂ to nₖ that is greater than n₁ is small, so that the reflectivity of incident light at the interface is reduced. That is, in the present embodiment, the optical window member 208 serves to prevent light reflection.

The configuration according to the present embodiment prevents degradation of the above-described optical window member 208, and prevents return light from reaching the surface-emitting laser 201. Further, the micro-protrusions according to the present embodiment reduce a contact area of the surface (the exit surface) of the optical window member 208 with particles generated within the combustion chamber 304, thereby preventing or reducing the adhesion of the particles to the optical window member 208, thus preventing the contamination of the optical window member 208. As a result, the intensity of laser beams emitted from the laser device 200 is prevented from changing.

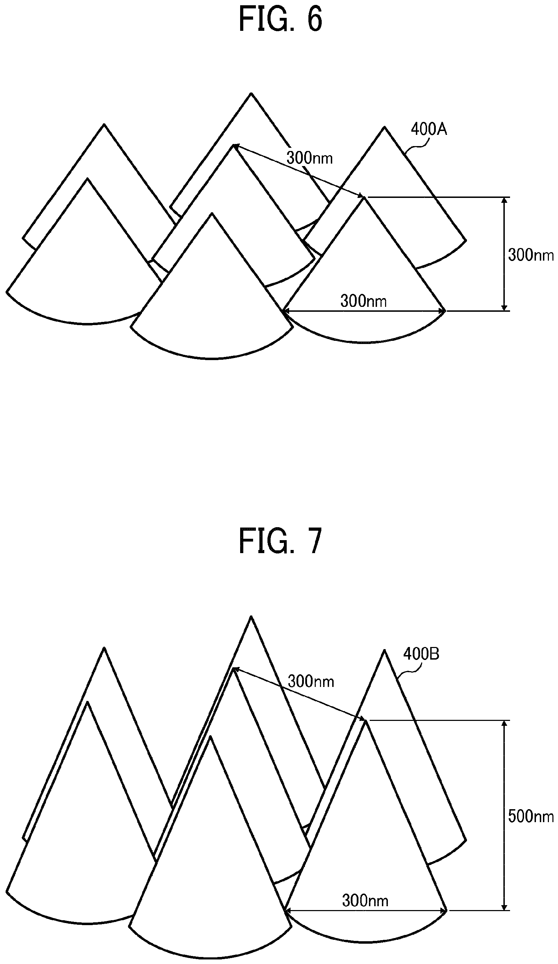

FIG. 6 is an illustration of an arrangement of micro-protrusions 400A according to Example 1, as an example of the micro-protrusion 400 of the tapered shape. Each micro-protrusion 400A is a cone having a height of 300 nm and the bottom 300 nm in diameter. A plurality of micro-protrusions 400A may be arranged as in a honeycomb, with a pitch (i.e., distance between adjacent protrusion peaks, distance between centers of adjacent bottom surfaces) of 300 nm.

As illustrated in FIG. 7 according to Example 2, micro-protrusions 400B may be arranged in honeycomb manner with a pitch (i.e., distance between adjacent protrusion peaks, distance between centers of adjacent bottom surfaces) of 300 nm. Each micro-protrusion 400B is a cone having a height of 500 nm and the bottom 300 nm in diameter. The micro-protrusion 400B according to Example 2 is a microstructure that has a higher aspect ratio of height to maximum diameter than the above-described Example 1 does. Accordingly, the micro-protrusion 400B with such a higher aspect ratio allows gradual changes in reflective index, thus further reducing reflectivity of incident light at the interface.

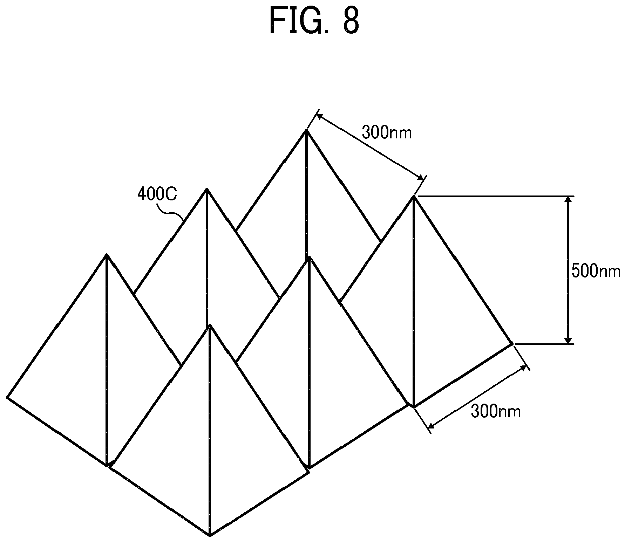

Alternatively, as illustrated in FIG. 8 according to Example 3, micro-protrusions 400C may be arranged in grid pattern with a pitch (i.e., distance between adjacent protrusion peaks, distance between centers of adjacent bottom surfaces) of 300 nm. Each micro-protrusion 400C is a quadrangular pyramid having a height of 500 nm and the bottom with a side of 300 nm. In Example 3, there is no space between adjacent micro-protrusions 400C, which reliably reduces the amount of change in reflective index n (from n₂ to nₖ that is greater than n₁. Thus, the micro-protrusions 400C according to Example 3 successfully reduce the reflectivity of incident light at the interface between the optical window member 208 and the combustion chamber 304 as compared to those of Examples 1 and 2.

The micro-protrusions 400A, 400B, and 400C are often manufactured by electron beam lithography and etching. Alternatively, the X-ray lithography or photolithography may also be employed.

Hereinafter, a description is given of micro-protrusion areas 1 through 5 as an example of an area of the output-end face of the optical window member 208. In each area, a plurality of micro-protrusions 400 are disposed.

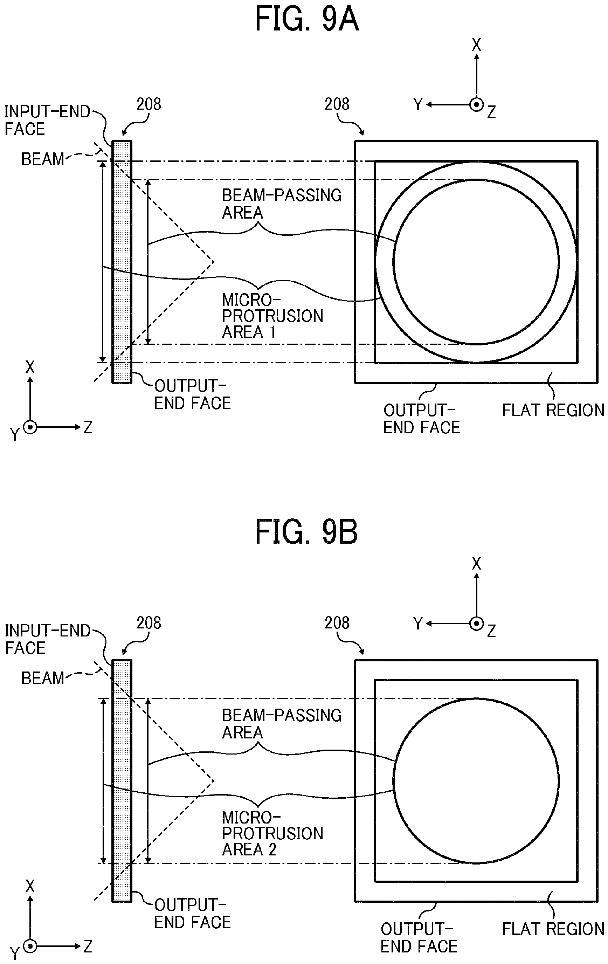

As illustrated in FIG. 9A, the micro-protrusion area 1 is an area within a rectangular flat region that is bonded to the output-end face of the housing 250. The micro-protrusion area 1 includes a beam-passing area.

With such a configuration, the entirety of a beam that passes through the output-end face enters the micro-protrusion area 1, thereby successfully reducing the reflectivity of the beam as a whole. Further, such a configuration allows a reduction in reflectivity of the beam as a whole that passes through the output-end face even with a slight misalignment of the beam-passing area relative to the output-end face.

As illustrated in FIG. 9B, the micro-protrusion area 2 coincides with the beam-passing area of the output-end face.

With such a configuration as well, the entirety of the beam that passes through the output-end face enters the micro-protrusion area 2, thereby successfully reducing the reflectivity of the entirety of the beam. In this configuration, the micro-protrusions 400 are formed to fit into the beam-passing area on the output-end face, so that less area is processed to form the micro-protrusions 400.

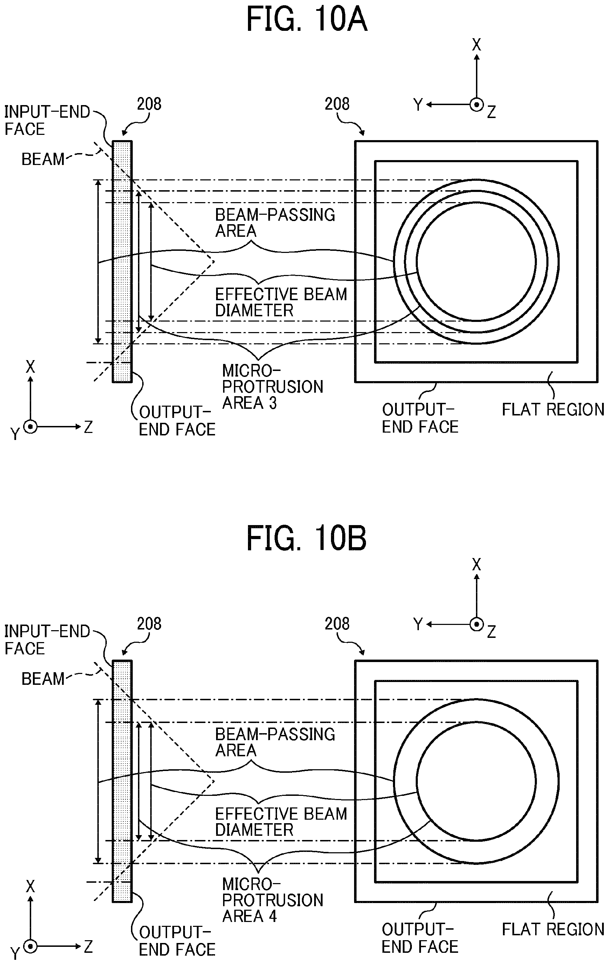

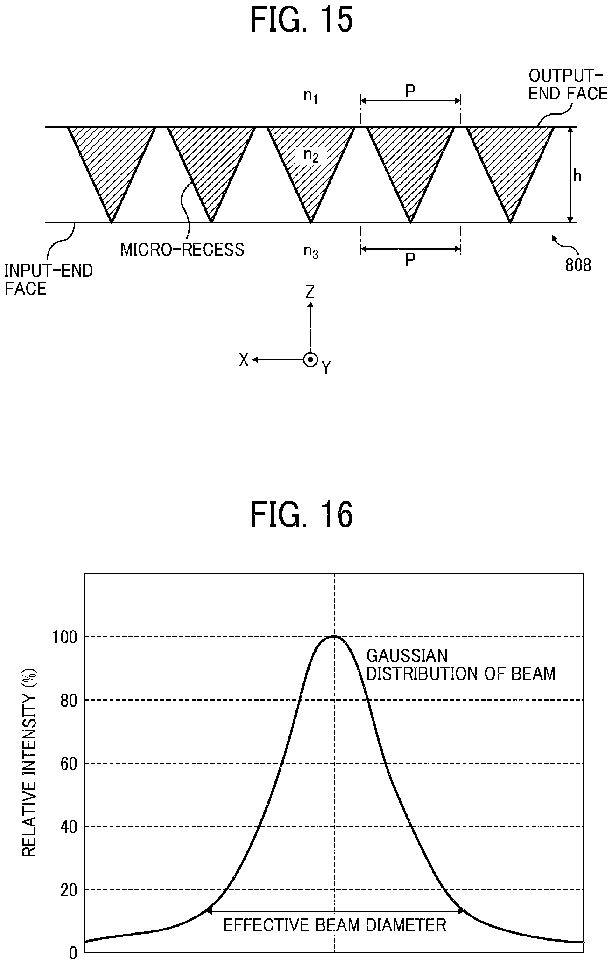

As illustrated in FIG. 10A, the micro-protrusion area 3 is included within the beam-passing area of the output-end face, and includes an area EB of which an effective beam diameter is a maximum diameter, on the output-end face. The effective beam diameter refers to a beam diameter having a relative intensity of 1 / e² (13.5%) relative to the maximum intensity (100%) in the Gaussian distribution of beam (refer to FIG. 16).

In this configuration, the beam that passes through the area EB (of which an effective beam diameter is a maximum diameter) of the output-end face substantially affects fluctuations in intensity of light emitted from the laser device 200. Accordingly, the entirety of the beam that passes through the area EB enters the micro-protrusion area 3, thereby successfully reducing the reflectivity of the entirety of the beam. This configuration further allows a reduction in reflectivity of the entirety of the beam that passes through the area EB of which an effective beam diameter is a maximum diameter even with a slight misalignment of the beam-passing area relative to the output-end face. In this configuration, the micro-protrusions 400 are formed to fit into only the area for the beam that substantially affects fluctuations in intensity of light emitted from the laser device 200 to pass through, so that even less area is processed to form the micro-protrusions 400.

As illustrated in FIG. 10B, the micro-protrusion area 4 coincides with the area EB of which an effective beam diameter is a maximum diameter in the output-end face.

In this configuration, within the beam that passes through the output-end face, the beam that passes through the area EB of the effective beam diameter substantially affects fluctuations in intensity of light that is emitted from the laser device 200. Accordingly, the entirety of the beam that passes through the area EB enters the micro-protrusion area 4, thereby successfully reducing the reflectivity of the entirety of the beam. With this configuration, the micro-protrusions 400 are formed within the area EB of which the effective beam diameter is a maximum diameter, so that even much less area is processed to form the micro-protrusions 400.

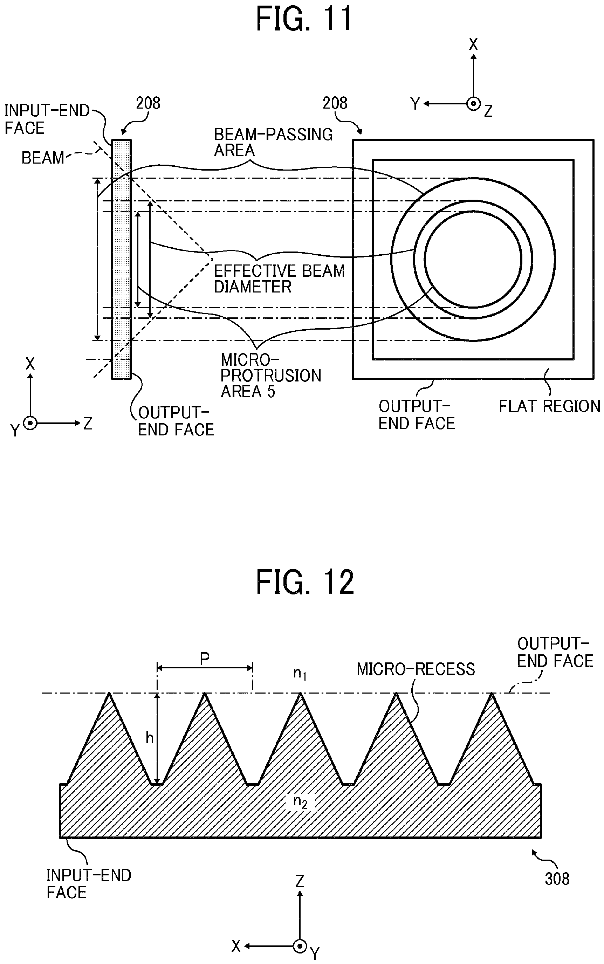

As illustrated in FIG. 11, the micro-protrusion area 5 is included in the area EB of which an effective beam diameter is a maximum diameter in the output-end face, and includes the center of the area EB.

In this configuration, a part of the beam that passes through the output-end face is a beam that passes through the area EB (of which an effective beam diameter is maximum) and has a greater intensity, including a maximum intensity. Further, the beam (i.e., the part of the beam that passes through the output-end face, hereinafter referred to as a "partial beam") that passes through the area EB has a significant impact on the fluctuations in intensity of light that is emitted from the laser device 200. Such a beam enters the micro-protrusion area 5, thereby successfully reducing the reflectivity of the partial beam. With such a configuration, the micro-protrusions 400 are formed only in a smaller area than the area EB of which an effective beam diameter is a maximum diameter, so that even much less area is processed to form the micro-protrusions 400.

The above-described optical window member 208, which has the input-end face (the incident surface a) and the output-end face (the exit surface b) for a laser beam to input and output, according to the present embodiments, includes a plurality of micro-protrusions 400 (protruding microstructures) on the output-end face. In this case, the interval between centers of adjacent micro-protrusions 400 is less than or equal to the wavelength of the laser beam. Note that the "interval between centers of adjacent micro-protrusions" 400 refers to the distance between centers of bottoms of adjacent micro-protrusions 400.

Such a configuration prevents or reduces the reflection of the laser beam at the output-end face of the optical window member 208.

More specifically, a reflective index rapidly changes at the interface between atmosphere and an optical window member all the time, which causes the reflection of a part of light that exit from the optical window member. On the output-end face of the optical window member 208, the micro-protrusions 400 are disposed at an interval of shorter than the wavelength of the laser light (incident light) between centers of adjacent micro-protrusions 400. This arrangement sequentially changes an apparent refractive index at the interface between the atmosphere and the optical window member 208, thereby preventing or reducing the reflection of light emitted from the laser device 200. This configuration prevents, e.g. the concentration of laser light in the interior of the optical window member 208, to prevent degradation of the optical window member 208 and thereby prevent a reduction in transmittance of the optical window member 208. Further, this configuration prevents return light from reaching the laser medium 206a or the pump source.

Thus, the fluctuations in intensity of laser light is successfully prevented or reduced.

To reduce the reflection of light at an optical window member, there has been typically employed the technique for applying an anti-reflection coating to the optical window member. However, many materials of the coating undesirably alter because the optical window member faces a combustion chamber and is exposed to a high temperature of approximately 60°C. For this reason, the anti-reflection coating is difficult to apply onto the output-end face of the optical window member.

In the present embodiment, the micro-protrusions 400 are formed on the output-end face of the optical window member 208, thereby preventing or reducing the reflection of light at the output-end face as compared to the configuration without such micro-protrusions. That is, the optical window member 208 according to the present embodiment includes a modified configuration in the output-end face, thereby successful preventing or reducing the reflection of light at the output-end face. Accordingly, the reflection of laser light at the output-end face is reliably prevented or reduced as long as the material of the optical window member 208 is high-temperature resistant and high-pressure resistant.

Further, the micro-protrusions 404 according to the present embodiment reduce a contact area of the exit surface of the optical window member 208 with particles generated within the combustion chamber 304. This prevents or reduces the adhesion of the particles to the optical window member 208, thus preventing the contamination of the optical window member 208, as compared to the configuration without such micro-protrusions 404. In such a case as well, a reduction in transmittance of the optical window member 208 is successfully prevented or reduced.

In the present embodiment, each micro-protrusion 400 has a tapered shape in which a cross-sectional area gradually decreases in a direction from the incident to the exit of the optical window member 208. This configuration slows changes in refractive index of incident light, thereby reducing the reflectivity of the incident light.

In the present embodiment, when the length of the micro-protrusion 400 in a protruding direction is longer than the maximum diameter of beam, the changes in refractive index slows down and the reflectivity sufficiently decreases.

In the present embodiment, when the distance between centers of adjacent micro-protrusions is substantially constant, a substantially uniform degree of reduction in reflectivity is obtained over the full range of the micro-protrusions 400.

The laser device 200 according to the present embodiment includes a light source unit LU, an optical system OS, and the optical window member 208. The light source unit LU includes the surface-emitting laser 201 as a laser light source and the laser resonator 206. The optical system collects and concentrates laser light emitted from the laser light source. The laser light having passed through the optical system enters into the optical window member 208. The laser device 200 according to the present embodiment successfully emits a light beam with a stable intensity.

The ignition system 301 according to the present embodiment includes the laser device 200 and the driver 210 that drives the laser light source of the laser device 200. The ignition system 301 according to the present embodiment successfully performs ignition in a stable manner.

The engine 300 as the internal combustion engine according to the present embodiment includes the above-described ignition system 301 that ignites fuel, to generate flammable gas. The engine 300 according to the present embodiment successfully burns fuel in a stable manner.

Note that the micro-protrusions may be disposed at an interval shorter than the wavelength of incident light between centers of adjacent micro-protrusions (e.g., adjacent protrusions), on the optical window member. The shape, size, and arrangement are not limited to the above-described examples of the present disclosure.

More specifically, each micro-protrusion may be a tapered shape of, e.g., an elliptical cone, any polygonal pyramid other than quadrilateral pyramid, a circular truncated cone, an elliptical truncated cone, or polygonal truncated cone. Alternatively, each micro-protrusion may be, e.g., a circular cylinder, an elliptical cylinder, or a polygonal cylinder.

In some embodiments, the cross section of the micro-protrusion may be curved on each side.

In some embodiments, the cross-sectional area of the micro-protrusion may decrease in a stepwise manner in the +Z direction, i.e., a tapered shape, instead of the tapered shape in which the cross-sectional area gradually (slowly) decreases in the +Z direction.

In some embodiments, the micro-protrusions may differ in shape or size from each other.

In some embodiments, the micro-protrusions may not be arranged in a regular manner.

In some embodiments, the pitch between adjacent micro-protrusions (the distance between adjacent centers) may not be constant.

In some embodiments, as illustrated in FIG. 12 for example, a plurality of micro-recesses (recessed microstructures), instead of the micro-protrusions, may be formed on the output-end face of an optical window member 308 according to variation 1. The micro-recesses may have a depth h and a pitch P between adjacent recesses. More specifically, the micro-recesses may be formed by etching a plurality of portion on the surface of a base material of the optical window member 508. In the configuration according to variation 1, effects similar to those attained by the above-described embodiments are also attained.

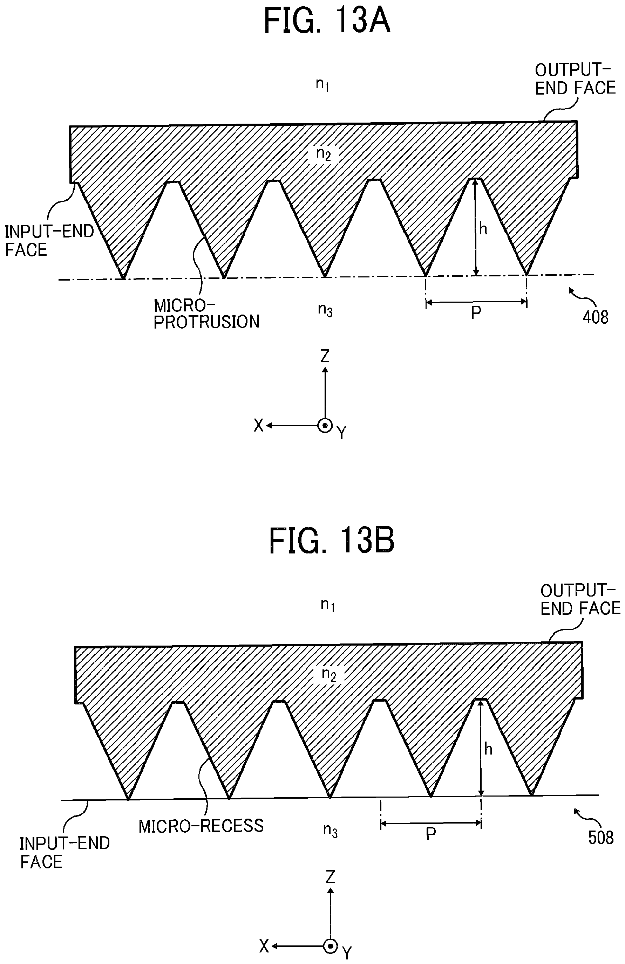

In some embodiments, as illustrated in FIG. 13A for example, micro-protrusions may be formed on the input-end face (the incident surface a) of an optical window member 408 according to variation 2. The micro-protrusions according to variation 2 may have a depth h and a pitch P. In variation 2, changes in refractive index from n₃ to nᵢ that is greater than n₂ is slower than changes in refractive index from n₃ to n₂ at the interface between the atmosphere within the housing 250 and the input-end face of the optical window member 408. These slowed changes in refractive index prevent the reflection of incident light at the input-end face, thereby preventing return light from reaching the laser medium 206a or the pump source.

In some embodiments, as illustrated in FIG. 13B for example, micro-recesses may be formed on the input-end face of an optical window member 508 according to variation 3. The micro-recesses according to variation 3 may have a depth h and a pitch P. More specifically, the micro-recesses may be formed by etching a plurality of portion on the surface of a base material of the optical window member 508. In variation 3 as well, changes in refractive index from n₃ to nᵢ that is greater than n₂ is slower than changes in refractive index from n₃ to n₂ at the interface between the atmosphere within the housing 250 and the input-end face of the optical window member 408. These slowed changes in refractive index prevent the reflection of incident light at the input-end face, thereby preventing return light from reaching the laser medium 206a or the pump source.

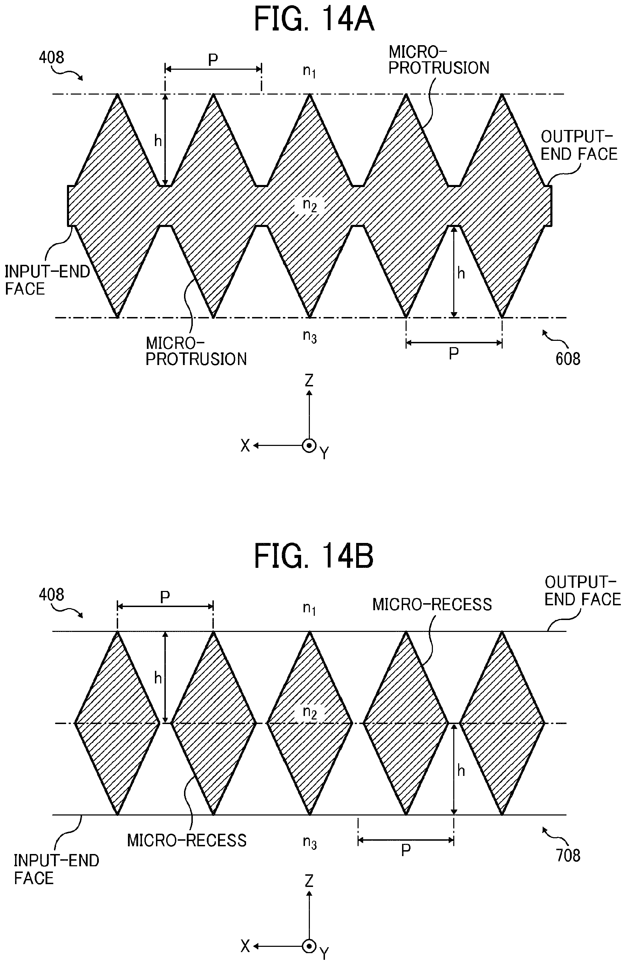

Alternatively, in some embodiments, as illustrated in FIG. 14A for example, micro-protrusions may be formed on both the input-end face and the output-end face of an optical window member 608 according to variation 4. The micro-protrusions according to variation 4 may have a depth h and a pitch P. The configuration according to variation 4 prevents the reflection of light at both the input-end face and the output-end face, thereby preventing return light from reaching the laser medium 206a or the pump source, thus significantly preventing or reducing fluctuations in intensity of laser light.

In some embodiments, as illustrated in FIG. 14B for example, micro-recesses may be formed on both the input-end face and the output-end face of an optical window member 708 according to variation 5. The micro-recesses according to variation 5 may have a depth h and a pitch P. More specifically, the micro-recesses may be formed by etching a plurality of portions on each surface of a base material of the optical window member 708. The configuration according to variation 5 prevents the reflection of light at both the input-end face and the output-end face, thereby preventing return light from reaching the laser medium 206a or the pump source, thus significantly preventing or reducing fluctuations in intensity of laser light.

Alternatively, in some embodiments, as illustrated in FIG. 15 for example, micro-recesses may be formed on both the input-end face and the output-end face of an optical window member 808 according to variation 6. The micro-recesses according to variation 6 may have a depth h and a pitch P. In this case, the input-end face and the output-end face include common micro-recesses. More specifically, in variation 6, the micro-recesses may be formed by etching a plurality of portions on a surface of a base material of the optical window member 808 to penetrate from one side to the other side. The configuration according to variation 6 prevents the reflection of light at both the input-end face and the output-end face, thereby preventing return light from reaching the laser medium 206a or the pump source, thus significantly preventing or reducing fluctuations in intensity of laser light. The configuration according to variation 6 also successfully reduces an optical window member in thickness.

Note that the above-described configurations of the micro-protrusion areas 1 through 6 may apply to areas in which the micro-protrusions or the micro-recesses according to the above-described variations 1 through 6 are formed.

In the above-described variations 4 and 5, one-side protrusions and recesses are opposed to the-other-side protrusions and recessions, respectively. However, no limitation is indicated therein, and one-side protrusions and recesses may not be opposed to the-other-side protrusions and recessions, respectively.

In the above-described variations 1 through 6, the optical window member is rectangular. However, no limitation is indicated therein, and the optical widow member may be any other shapes, such as polygon, circular, and elliptic. Further, in the above-described variations 1 through 6, the micro-protrusion area and the micro-recess area are circular. However, no limitation is indicated therein, and the micro-protrusion area and the micro-recess area may be any other shapes, such as circular and elliptic.

In the embodiments described above, cases in which a surface-emitting laser is used as a pump source are described. However, no limitation is intended thereby. For example, an end-surface emitting laser or other type of light source may be used as a pump source.

When the surface-emitting laser 201 is not isolated from the laser resonator 206 in the embodiments described above, the provision of the optical fiber 204 may be omitted.

In the above-described embodiments, cases in which an internal combustion engine to move a piston with flammable gas are described. However, no limitation is intended thereby. For example, a rotary engine, a gas turbine engine, and a jet engine may be used as the engine. In other words, any engine may be used as long as it burns fuel to produce gas.

The ignition system 301 may be used for cogeneration, in which exhaust heat is reused to increase overall energy efficiency. The exhaust heat in cogeneration is used for obtaining motive power, heating energy, or cooling energy.

In the embodiments described above, cases in which the ignition system 301 is used for an internal combustion engine are described. However, no limitation is intended thereby.

In the above-described embodiments, cases in which the laser device 200 is used for an ignition system are described. However, no limitation is intended thereby. For example, the laser device 200 may be used for a laser beam machine, a laser peening apparatus, or a terahertz generator.

In the above-described embodiments, cases in which the optical window member is used for the laser device 200 and the ignition system 301 are described. However, no limitation is intended thereby. For example, the optical window member may be used as an exit window of laser light that is applied to an image forming apparatus, such as a laser copier and a laser printer, and an image projection device such as a projector.

As understood from the above-described embodiments, the optical window member according to the embodiments of the present disclosure is effective particularly when used under a low-temperature environment, an ambient-temperature environment, and a high-temperature environment under which anti-reflection coating is difficult to apply onto the output-end face. In other words, the optical window member according to the embodiments of the present disclosure is widely available as an optical window member to allow laser light to exit under any temperature environment.

## Claims

1. An optical window member (208), comprising:
an incident surface (a) onto which a laser light is directed;
an exit surface (b) from which the laser light exits;
at least one of the incident surface (a) and the exit surface (b) having a plurality of protrusions or recesses; and
an interval between centers of adjacent protrusions or recesses of the plurality of protrusions or recesses is shorter than or equal to a wavelength of the laser light.

2. The optical window member (208) according to claim 1,
wherein a cross-sectional area of the plurality of protrusions or recesses decreases in a gradual manner or in a stepwise manner in a direction from an incident side to an exit side.

3. The optical window member (208) according to claim 2,
wherein each of the plurality of protrusions or recesses has a tapered shape.

4. The optical window member (208) according to any one of claims 1 through 3,
wherein each of the plurality of protrusions or recesses has a protruding-directional or recessed-directional length (h) longer than a maximum diameter of a bottom of each of the plurality of protrusions or recesses.

5. The optical window member (208) according to any one of claims 1 through 4,
wherein the interval between centers of adjacent protrusions or adjacent recesses is constant.

6. The optical window member (208) according to any one of claims 1 through 5,
wherein the at least one of the incident surface (a) and the exit surface (b) includes a beam-passing area through which the laser light passes,
wherein the plurality of protrusions or recesses is disposed at least over a full range of an area (EB), of which an effective beam diameter is a maximum diameter, and the area (EB) is included in the beam-passing area.

7. The optical window member (208) according to claim 6,
wherein the plurality of protrusions or recesses is disposed at least over a full range of the beam-passing area.

8. The optical window member (208) according to any one of claims 1 through 7,
wherein the optical window member (208) is made of sapphire glass.

9. The optical window member (208) according to any one of claims 1 through 8,
wherein the plurality of protrusions or recesses is antireflective.

10. A laser device (200), comprising:
a light source unit (LU) including a laser light source (201);
an optical system (OP) to concentrate a laser light emitted from the light source unit (LU); and
the optical window member (208) according to any one of claims 1 through 9, which the laser light having passed through the optical system (OP) enters.

11. The laser device (200) according to claim 10,
wherein the light source unit (LU) further includes a laser resonator (206) including a laser medium (206a), and
wherein the laser light source (201) is a pump source to pump the laser medium (206a).

12. The laser device (200) according to claim 11,
wherein the pump source includes a surface-emitting laser.

13. The laser device (200) according to claim 11 or 12, further comprising a light transmission member (204) between the pump source and the laser resonator (206) to transmit light emitted from the pump source to the laser resonator (206).

14. An ignition system (301), comprising:
the laser device (200) according to any one of claims 10 through 13; and
a driver (210) to drive the laser light source of the laser device (200).

15. An internal combustion (300), comprising the ignition system (301) according to claim 14 to ignite fuel to generate flammable gas.
